# EUROPEAN PATENT APPLICATION

(11) **EP 1 072 628 A2**
(43) Date of publication of application: **31.01.2001**
(21) Application number: 00306393.0
(22) Date of filing: 27.07.2000
(51) Int. Cl.: C08G 77/60, C08G 77/54, C09D 183/16, C09D 183/14

(54) **Curable silicon-containing aromatic polymer composition**

(30) Priority: 29.07.1999 JP 21479699
(71) Applicant: Dow Corning Toray Silicone Co., Ltd., Tokyo (JP)
(72) Inventor: Kobayashi, Hideki, Dow Corning Toray, Ichihara-shi, Chiba Prefecture (JP); Masatomi, Toru, Dow Corning Toray, Ichihara-shi, Chiba Prefecture (JP)
(74) Representative: Kyle, Diana

(57) **Abstract**

A curable silicon-containing aromatic polymer composition is disclosed containing a silicon-containing aromatic polymer whose main chain incorporates a charge-transporting group. The curable silicon-containing aromatic polymer composition comprises
(A) 100 weight parts silicon-containing aromatic polymer having a silicon-bonded hydrolyzable group at both molecular chain terminals and a main chain as defined by units of the general formula 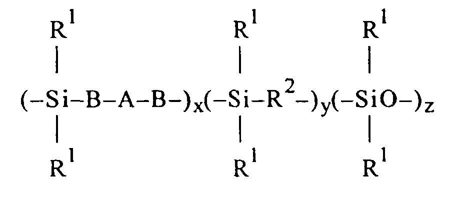 wherein A denotes a divalent organic group that contains at least 1 nitrogen atom and at least 3 six-membered aromatic rings, B denotes a C₂ to C₆ alkylene group, R¹ denotes unsubstituted or halogen-substituted C₁ to C₁₀ monovalent hydrocarbon groups that lack aliphatic unsaturation, R² is an alkyleneoxyalkylene group or an unsubstituted or alkoxy-substituted C₂ to C₁₀ divalent hydrocarbon group, the subscript **x** is an integer with a value of at least 1, the subscripts **y** and **z** are each integers with a value of at least 0, and (**y** + **z**) is at least 2,
(B) 1 to 90 weight parts of an organosilane having the general formula R_{f}SiX_{4-f}, or the partial hydrolysis condensates thereof, where R denotes unsubstituted or halogen-substituted monovalent hydrocarbon groups, X denotes hydrolyzable groups, **f** is an integer from 0 to 2, and
(C ) a cure-promoting catalyst in sufficient quantity to induce the cure of the silicon-containing aromatic polymer composition.

The composition of this invention cure to form a high-hardness coating that has excellent water repellency and solvent resistance.

This invention further teaches a method of making curable silicon-containing aromatic polymer compositions. The present invention also relates to the cured film compositions prepared from the curable silicon containing aromatic polymer compositions, and substrates coated there from.

## Description

This invention provides a curable silicon-containing aromatic polymer composition and more particularly to a curable silicon-containing aromatic polymer composition that is based on a silicon-containing aromatic polymer that contains a charge-transporting group such as an aromatic amino group.

Within the realm of charge-transfer group-functional organosilicon compounds, Japanese Laid Open (Kokai or Unexamined) Patent Application Number Hei 10-218887 (218,887/1998) teaches cyclic polysilanes carrying pendant charge transfer groups, for example, oligocyclo(ethyl(4-(N,N-diphenylamino)phenyl)silane), as well as a method for film formation that employs the spin-coating of the aforesaid cyclic polysilanes in toluene solution. However, the coatings afforded by these polysilanes have a low solvent resistance and will undergo redissolution in such solvents as toluene.

The present inventors have discovered a curable silicon-containing aromatic polymer composition that is based on a silicon-containing aromatic polymer whose main chain incorporates a charge-transfer group and that cures to form a high-hardness coating that has excellent water repellency and solvent resistance.

This invention relates to a curable silicon-containing aromatic polymer composition comprising;
(A) 100 weight parts silicon-containing aromatic polymer having a silicon-bonded hydrolyzable group at both molecular chain terminals and a main chain as defined by units of the general formula 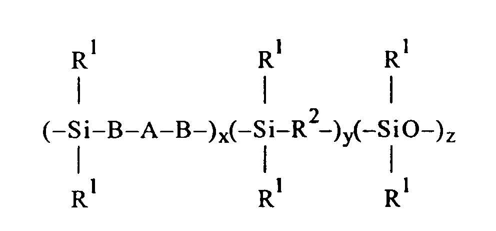 wherein A denotes a divalent organic group that contains at least 1 nitrogen atom and at least 3 six-membered aromatic rings, B denotes a C₂ to C₆ alkylene group, R denotes unsubstituted or halogen-substituted C₁ to C₁₀ monovalent hydrocarbon groups that lack aliphatic unsaturation, R² is an alkyleneoxyalkylene group or an unsubstituted or alkoxy-substituted C₂ to C₁₀ divalent hydrocarbon group, the subscript x is an integer with a value of at least 1, the subscripts y and z are each integers with a value of at least 0, and (y + z) is at least 2,
(B) 1 to 90 weight parts of an organosilane having the general formula R_{f}SiX_{4-f}, or the partial hydrolysis condensates thereof, where R denotes unsubstituted or halogen-substituted monovalent hydrocarbon groups, X denotes hydrolyzable groups, **f** is an integer from 0 to 2, and
(C) a cure-promoting catalyst in sufficient quantity to induce the cure of the silicon-containing aromatic polymer composition.

This invention further teaches a method of making curable silicon-containing aromatic polymer compositions. The present invention also relates to the cured film compositions prepared from the curable silicon containing aromatic polymer compositions, and substrates coated therefrom.

The silicon-containing aromatic polymer (A) component of the compositions of the present invention is a polymeric compound that bears a silicon-bonded hydrolyzable group at both molecular chain terminals and has a main chain as defined by the following units of the general formula. 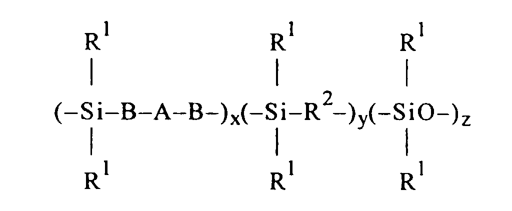 The group A in the preceding formula denotes a divalent organic group that contains at least 1 nitrogen atom and at least 3 six-membered aromatic rings to act as a charge transfer group. In specific terms group A can be exemplified by charge-transfer groups selected from the following structures. 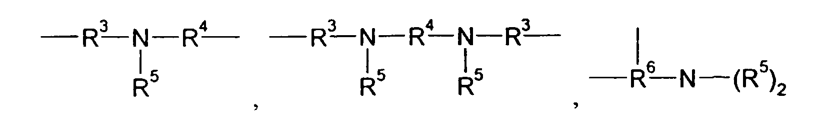 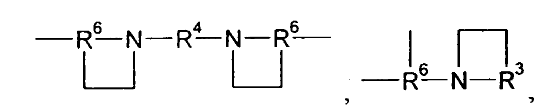 or 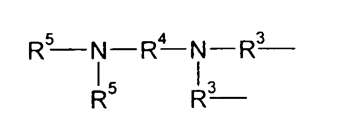 R³ and R⁴ in the preceding structures denote divalent hydrocarbon groups, R⁵ denotes monovalent hydrocarbon groups, and R⁶ denotes trivalent hydrocarbon groups. At least 1 of the R³ , R⁴ , R⁵ or R⁶ must be an aromatic hydrocarbon ring-containing group, and in addition, group A must contain a total of at least 3 six-membered aromatic rings. Each of R³ , R⁴ , R⁵ and R⁶ contains a six-membered aromatic ring in a preferred embodiment of these hydrocarbon groups, for example, R³ and R⁴ can be arylene, R⁵ can be aryl, and R⁶ can be an aromatic hydrocarbon ring-containing group. A portion of the hydrogen in the aromatic rings in R³ through R⁶ may be substituted by, for example, halogen, alkoxy, or alkyl such as methyl and ethyl. For the purposes of this invention, naphthalene is considered to have 2 six-membered aromatic rings. Within the context of this invention "charge-transporting" denotes the capacity to transport electric charge. The charge-transporting groups represented by A preferably have an ionization potential no greater than 6.2 eV and particularly preferably have an ionization potential in the range from 4.5 eV to 6.2 eV. The bases for these values are as follows: an ionization potential in excess of 6.2 eV serves to inhibit charge injection and thereby facilitate charge accumulation (charging), while the polymer becomes very susceptible to oxidation, and hence very susceptible to degradation, at an ionization potential below 4.5 eV. The ionization potential can be measured by atmospheric photoelectron analysis using an AC-1 surface analyzer from Riken Keiki, Tokyo, Japan. The divalent organic group A can be specifically exemplified by imidazole derivatives, the derivatives of a triarylamine such as triphenylamine, 9-(p-diethylaminostyryl)anthracene derivatives, 1,1-bis(4-dibenzylaminophenyl)propane derivatives, and groups with the following structures in which Me = methyl, Et = ethyl, Bu = butyl, Pr = propyl, and Ph = phenylene. 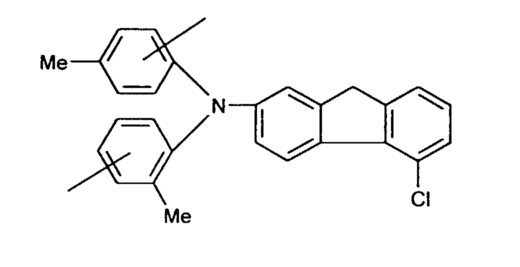 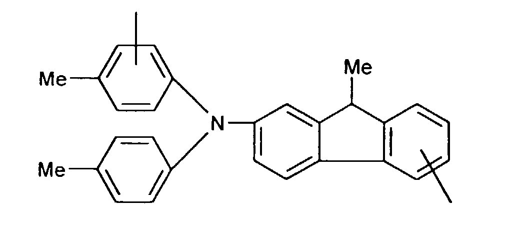 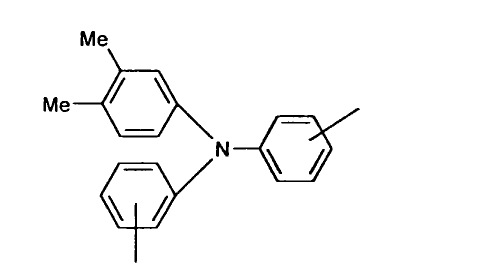 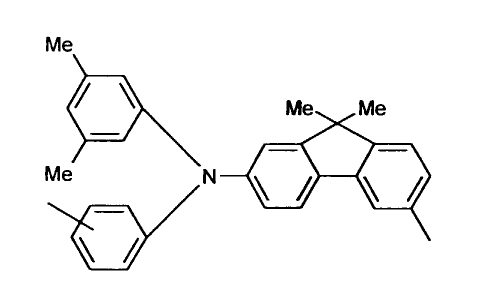 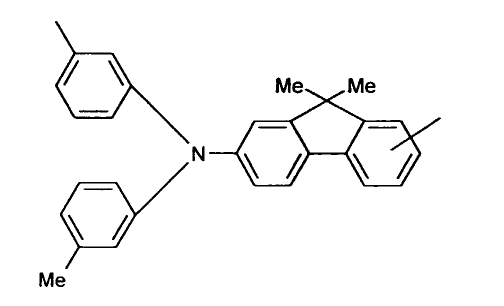 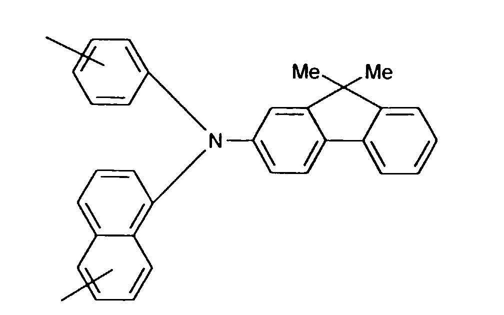 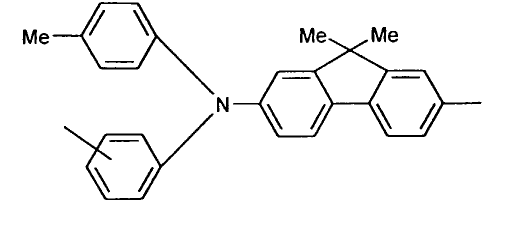 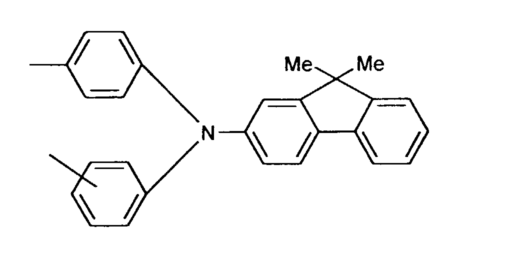 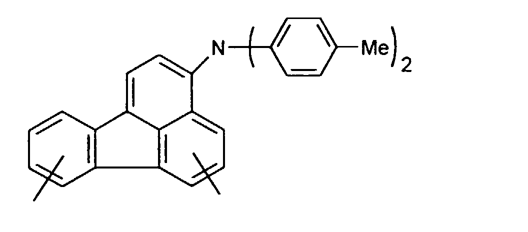 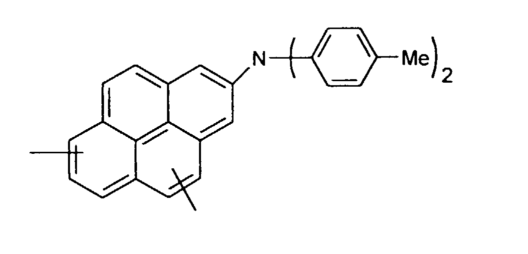 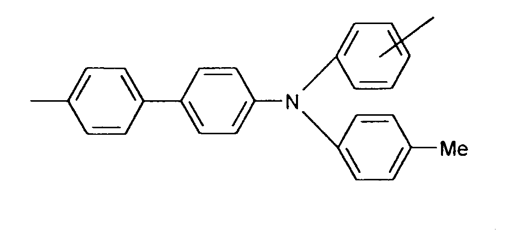 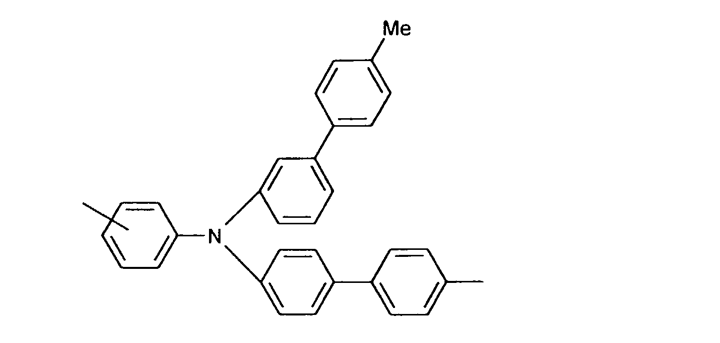 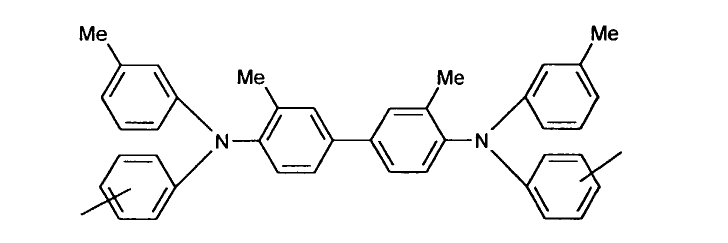 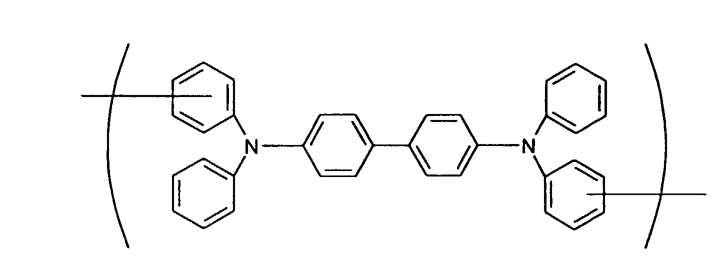 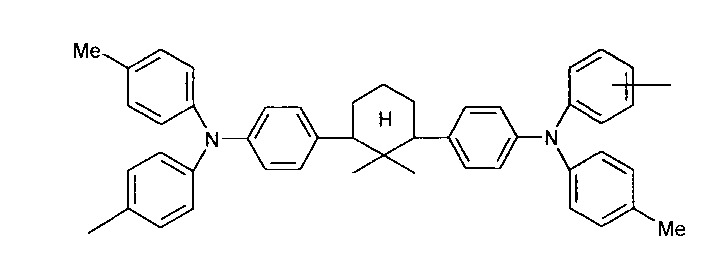 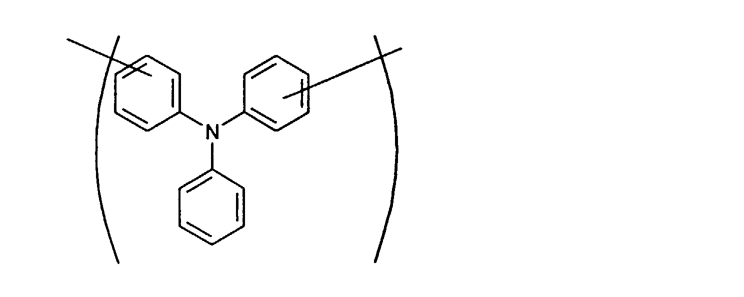 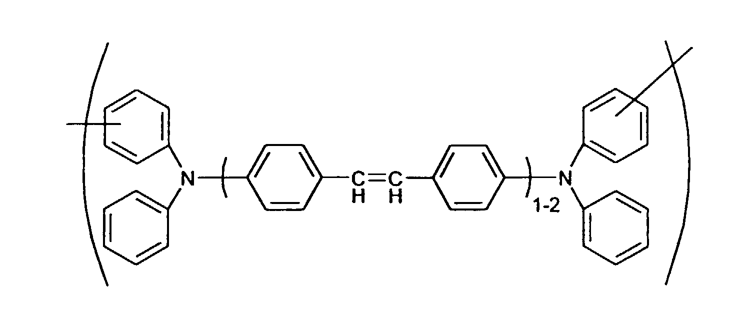 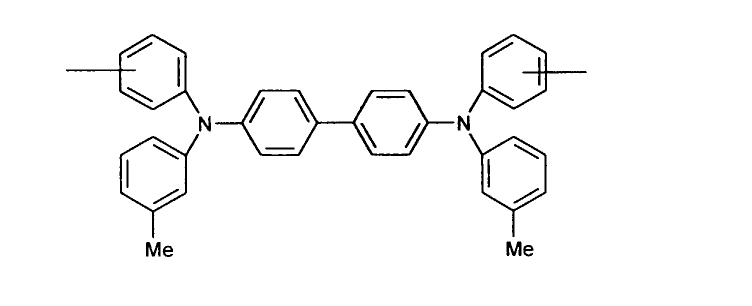 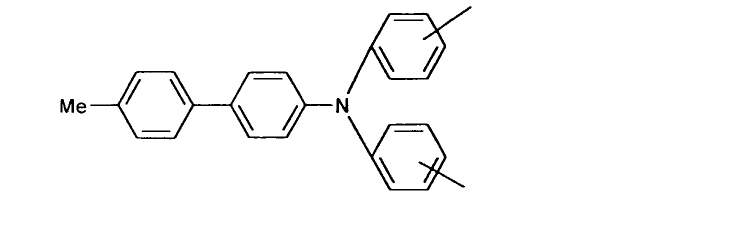 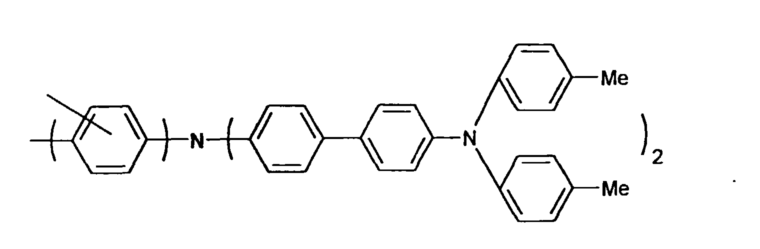 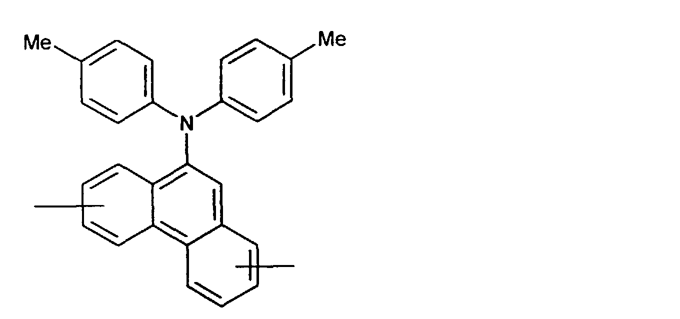 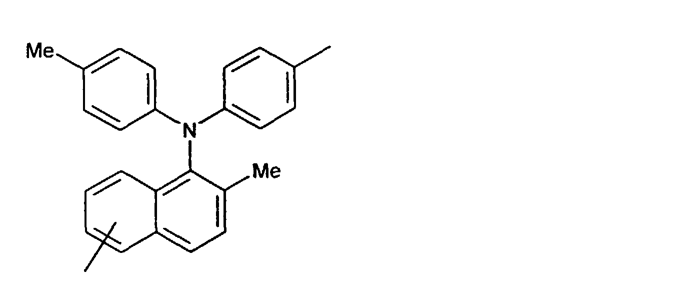 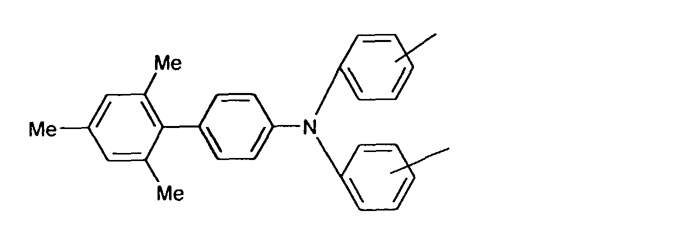 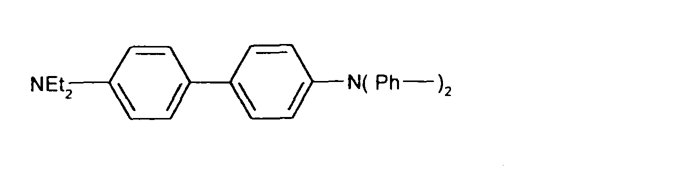 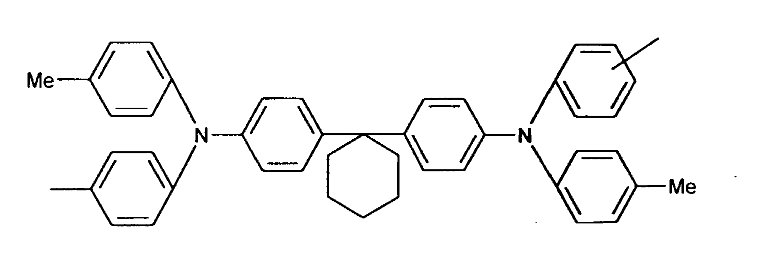 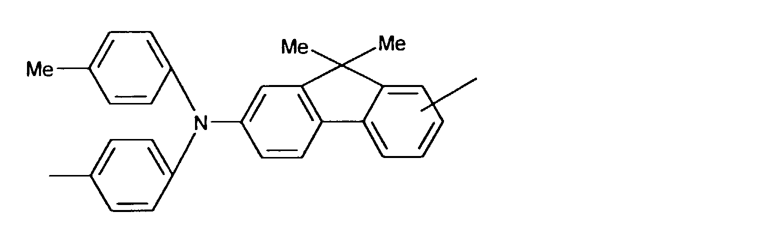 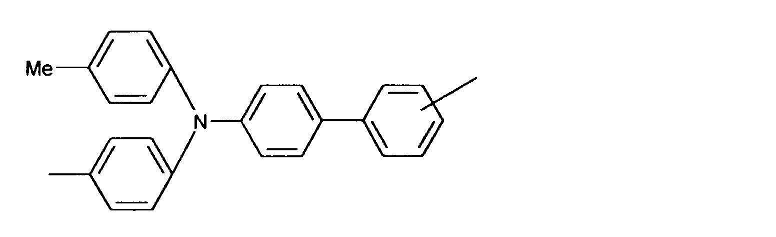 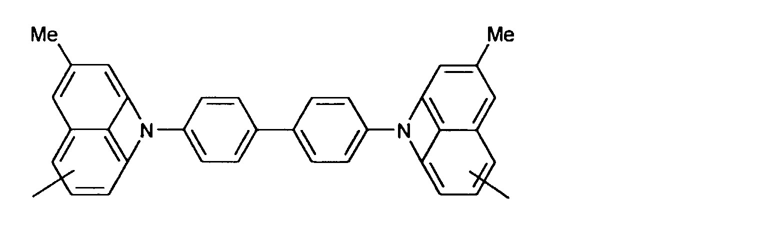 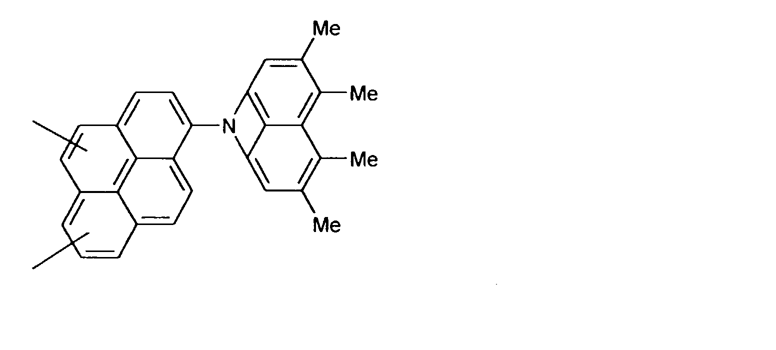 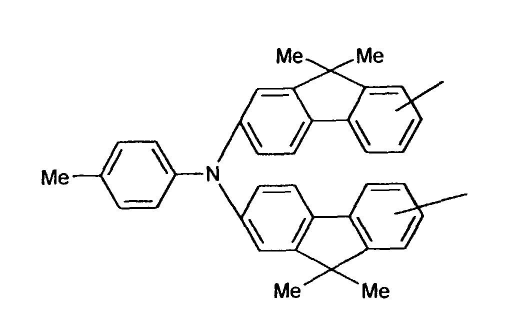 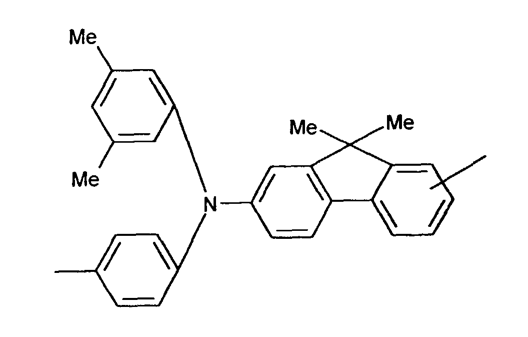 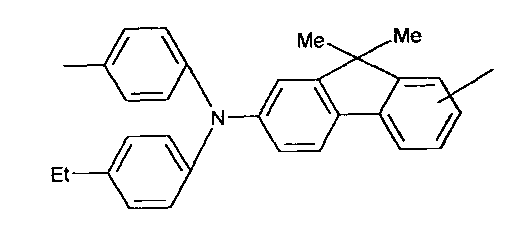 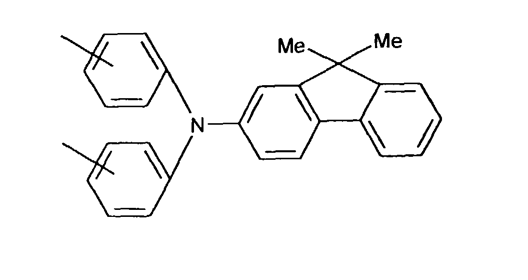 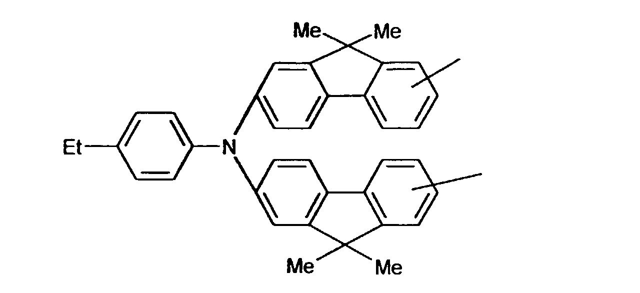 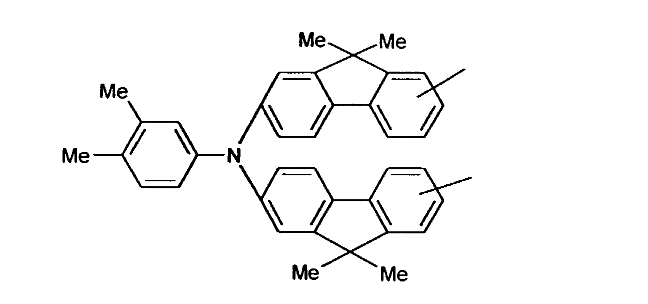 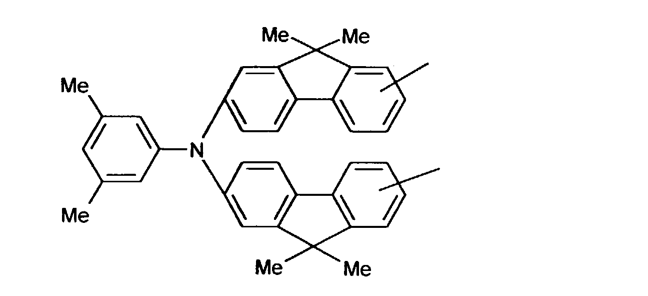 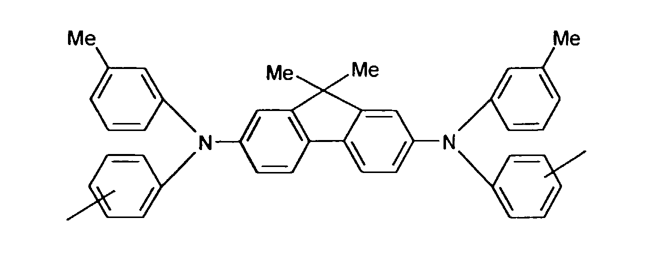 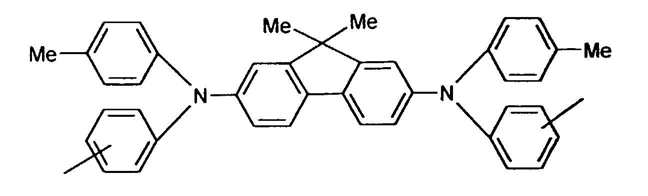 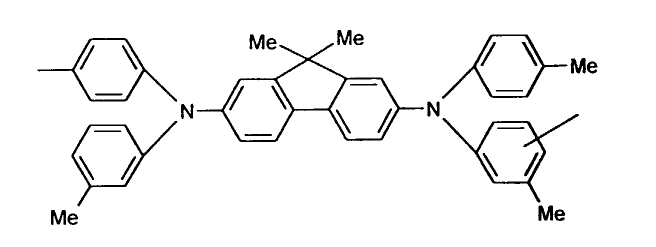 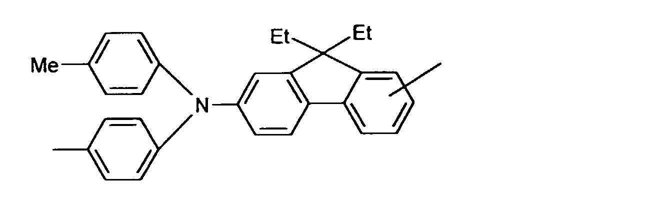 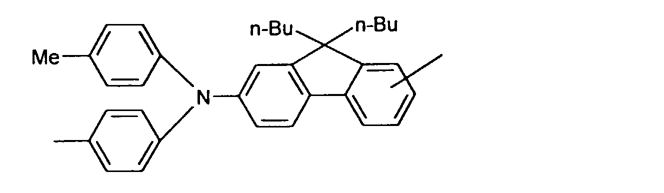 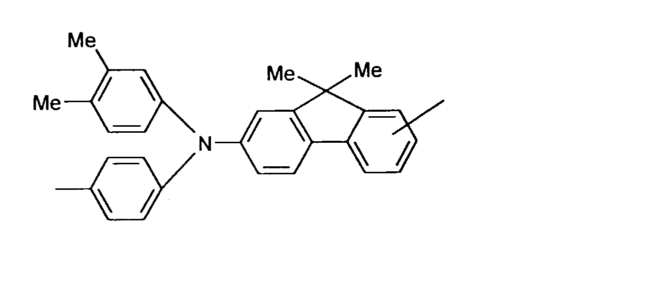 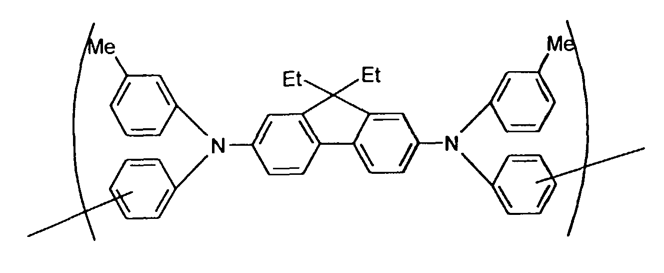 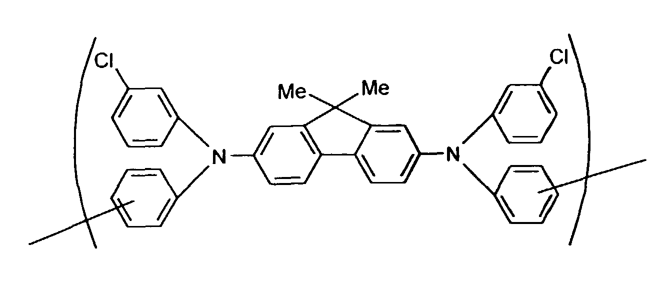 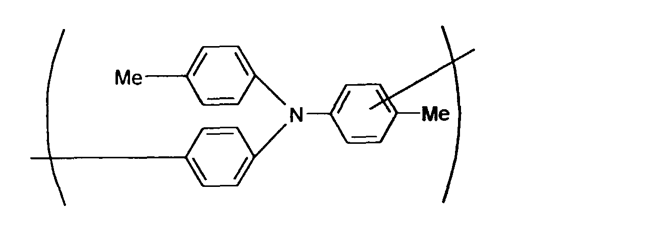 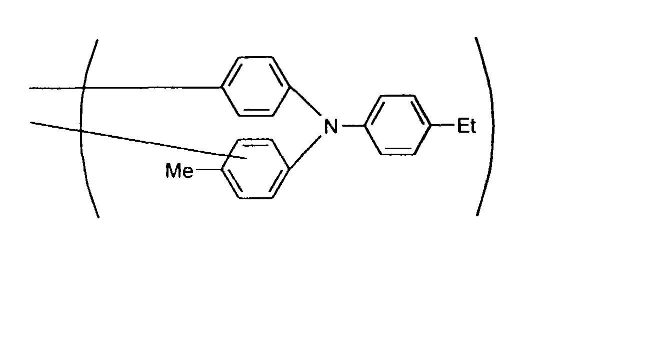 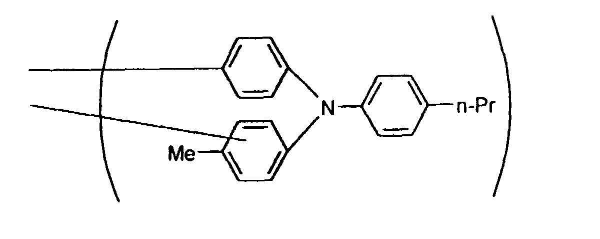 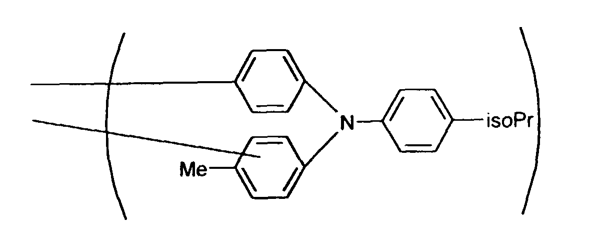 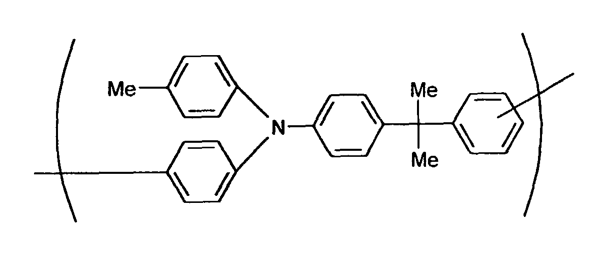 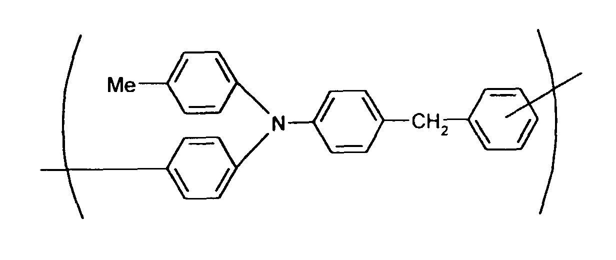 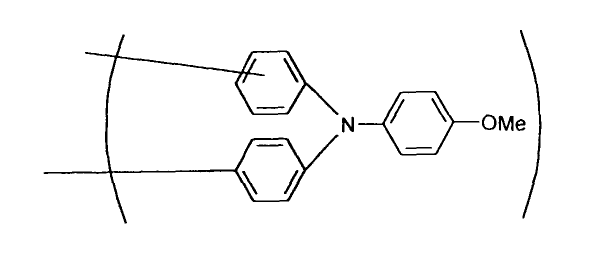 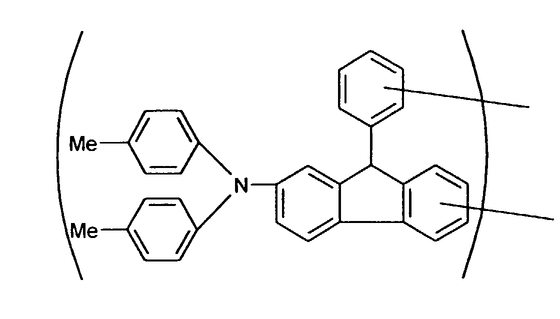 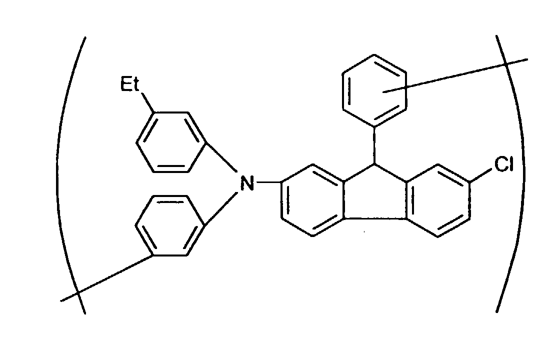 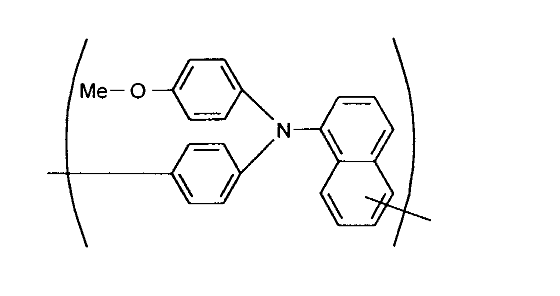 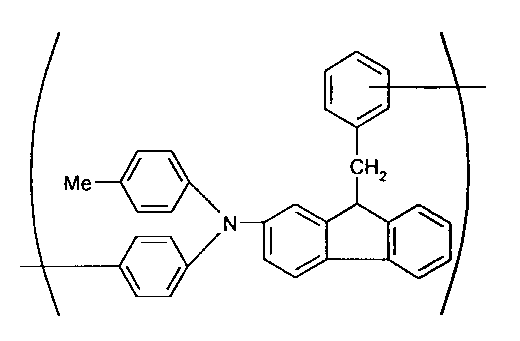 The group B denotes C₂ to C₆ alkylene and can be specifically exemplified by straight-chain and branched-chain alkylene groups such as ethylene, methylethylene, ethylethylene, propylethylene, butylethylene, propylene, butylene, 1-methylpropylene, pentylene, and hexylene, among which ethylene, propylene, butylene, and hexylene are preferred. R¹ denotes unsubstituted or halogen-substituted C₁ to C₁₀ monovalent hydrocarbon groups that lack aliphatic unsaturation. R¹ can be specifically exemplified by alkyl groups such as methyl, ethyl, propyl, butyl, pentyl, and hexyl; aryl groups such as phenyl, tolyl, and xylyl; aralkyl groups such as benzyl and phenethyl; and fluorinated hydrocarbon groups such as trifluoropropyl, nonafluorohexyl, and heptadecafluorooctyl. Methyl and phenyl are preferred among the preceding for R¹. R² is an alkyleneoxyalkylene group, an unsubstituted C₂ to C₁₀ divalent hydrocarbon group, or a alkoxy-substituted C₂ to C₁₀ divalent hydrocarbon group. The alkyleneoxyalkylene can be exemplified by ethyleneoxyethylene, while the unsubstituted C₂ to C₁₀ divalent hydrocarbon group can be exemplified by straight-chain and branched-chain alkylene such as ethylene, methylethylene, ethylethylene, propylethylene, butylethylene, propylene, butylene, 1-methylpropylene, pentylene, and hexylene, and by phenylene groups such as p-phenylene, m-phenylene, o-phenylene, 2-methyl-1,4-phenylene. The alkoxy-substituted C₂ to C₁₀ divalent hydrocarbon group can be exemplified by 2-methoxy-1,4-phenylene, and 2-ethoxy-1,4-phenylene. Ethylene and p-phenylene are preferred among the preceding for R². The subscript **x** is an integer with a value of at least 1 and preferably is in the range from 1 to 2,000 and more preferably is in the range from 2 to 1,000. The subscripts **y** and **z** are each integers with a value of at least 0, while (**y** + **z**) must be at least 2. More specifically, **y** is preferably in the range from 2 to 2,000 and more preferably is in the range from 2 to 1,000; and **z** will as a general rule be in the range from 0 to 1,000. The hydrolyzable group present at the terminals of the silicon-containing aromatic polymer under consideration can be exemplified by alkoxy (e.g., methoxy, ethoxy, and propoxy), halogen (e.g., chlorine), acetoxy, and the methyl ethyl ketoxime group, in each case bonded to silicon. Preferred among the preceding are silicon-bonded alkoxy such as alkoxysilylalkyl and alkoxysiloxy. The weight-average molecular weight of the subject silicon-containing aromatic polymer will as a general rule be in the range from 1,000 to 1,000,000 and preferably is in the range from 5,000 to 500,000.

The silicon-containing aromatic polymer (A) can be exemplified by the following general formula (F1). 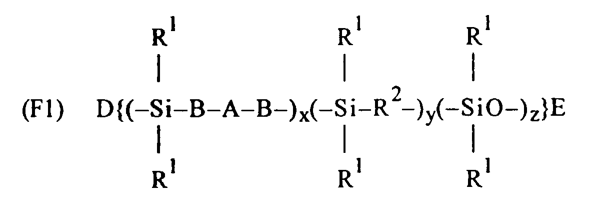 A, B, R¹, R², **x**, **y**, and **z** in (F1) are defined as above, while D is X- or a group with the general formula 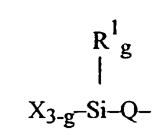 and E is a group with the general formula 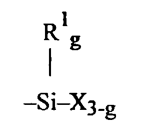 The group X in the preceding formulas is a hydrolyzable group, for example, alkoxy (e.g., methoxy, ethoxy, propoxy), halogen (e.g., chlorine), acetoxy, and the methyl ethyl ketoxime group. Alkoxy is preferred for X. Q in the preceding formulas is the oxygen atom or a divalent hydrocarbon group; the latter can be exemplified by alkylene. The subscript **g** is an integer with a value of 0 to 2, and is preferably 0 or 1.

The silicon-containing aromatic polymer (A) as described hereinabove can be exemplified by polymeric compounds with the following structures, in which Ph represents p-phenylene and Me represents methyl.

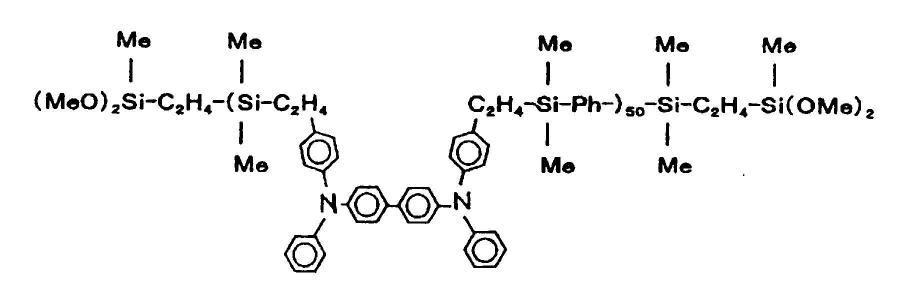

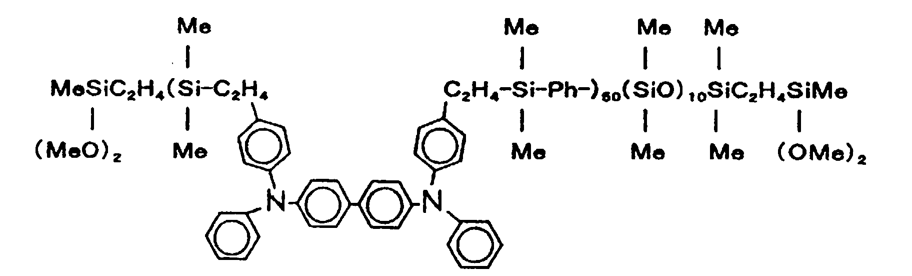

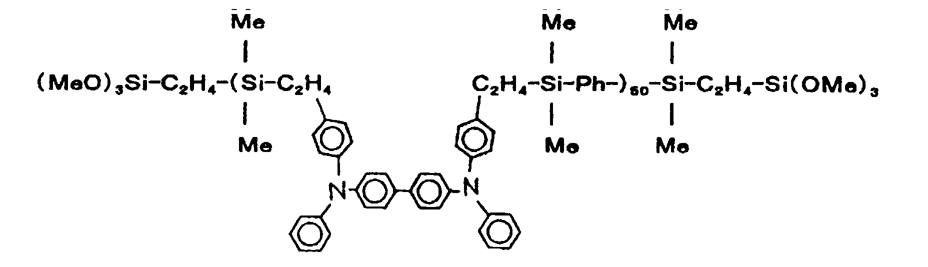

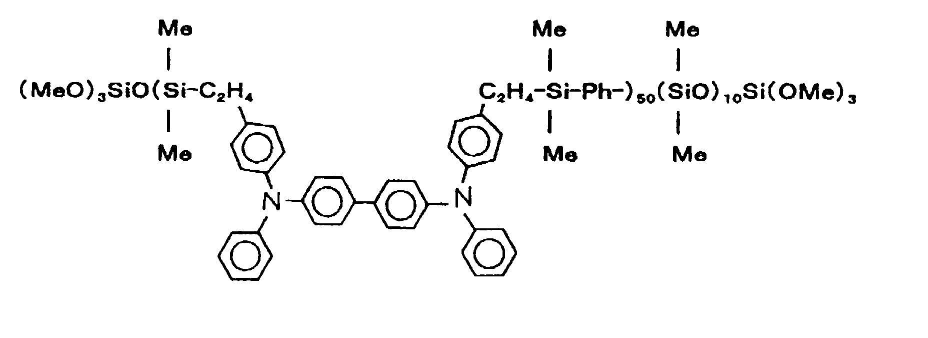

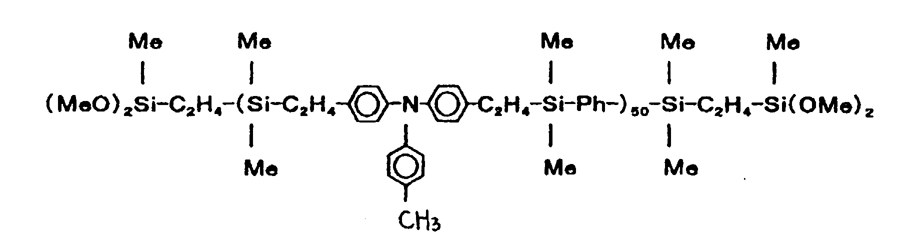

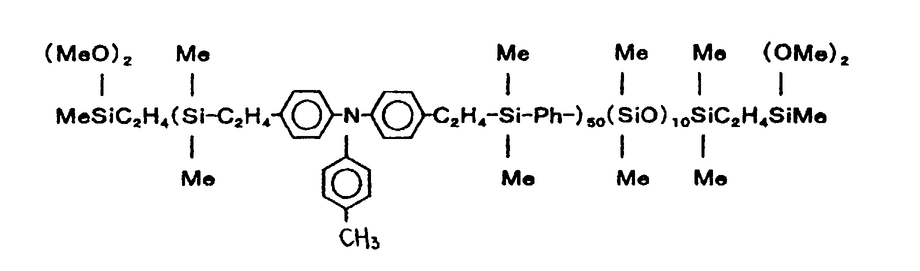

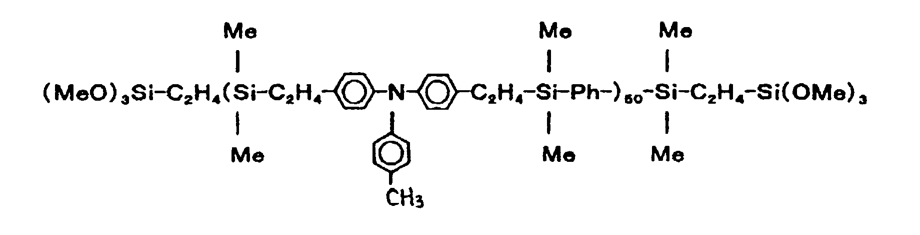

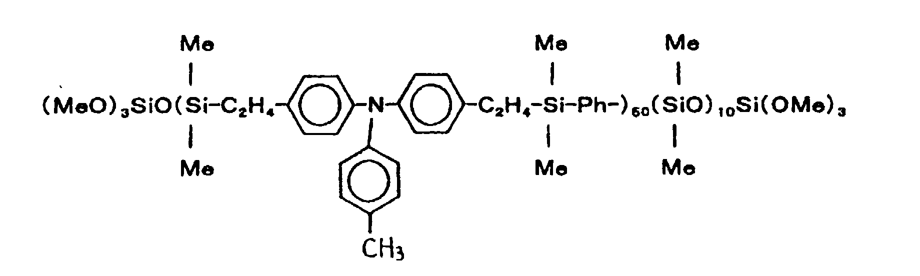

The silicon-containing aromatic polymer (A), which is the claimed invention in our related Japanese Patent Application Number H11-184763 and corresponding US application, can be synthesized by the execution of addition polymerization in the presence of a hydrosilylation catalyst between an aromatic compound with general formula (F2)
(F2) B¹-A-B¹ where A is defined as above and B¹ denotes C₂ to C₆ alkenyl or,
a disilyl compound with general formula (F3) 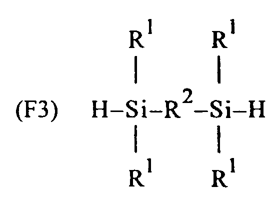 where R¹ and R² are defined as above or
a disiloxane compound with general formula (F4) 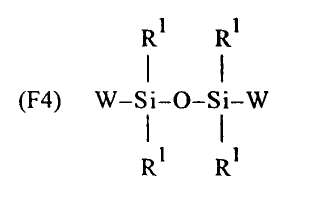 R¹ is defined as above and W is the hydrogen atom or C₂ to C₆ alkenyl. The polymerization terminator used in this synthesis should be an organosilicon compound that contains both a hydrolyzable group and SiH or an organosilicon compound that contains both a hydrolyzable group and C₂ to C₆ alkenyl. The polymerization terminator can be specifically exemplified by the following alkoxysilane compounds in which Me indicates methyl and Vi indicates vinyl.

HSi(OMe)₃

HSi(OC₂H₅)₃

HMeSi(OMe)₂

HMeSi(OC₂H₅)₂

HMe₂SiOMe

ViSi(OMe)₃

ViSi(OC₂H₅)₃

ViMeSi(OMe)₂

ViMeSi(OC₂H₅)₂

ViMe₂SiOMe

CH₂=CHCH₂Si(OMe)₃

CH₂=CHCH₂Si(OC₂H₅)₃

CH₂=CHCH₂SiMe(OMe)₂

CH₂=CH(CH₂)₄SiMe(OC₂H₅)₂

CH₂=CH(CH₂)₄SiMe(OMe)₂

CH₂=CH(CH₂)₄Si(OMe)₃

Component (B) is organosilane with the general formula R_{f}SiX_{4-f} or the partial hydrolysis condensates thereof. This component functions to induce cure of the inventive composition at room temperature in the presence of moisture and a catalyst. Component (B) also enables adjustments in the hardness of the cured film. R in the preceding general formula is an unsubstituted or halogen-substituted monovalent hydrocarbon group and can be specifically exemplified by alkyl such as methyl, ethyl, propyl, butyl, pentyl, and hexyl; alkenyl such as vinyl, propenyl, and hexenyl; aryl such as phenyl, tolyl, and xylyl; aralkyl such as benzyl and phenethyl; and fluorinated hydrocarbyl such as trifluoropropyl, nonafluorohexyl, and heptadecafluorooctyl. Methyl and phenyl are preferred among the preceding for R. The group X is a hydrolyzable group and can be exemplified by diorgano ketoxime groups such as the dimethyl ketoxime and methyl ethyl ketoxime groups, alkoxy groups such as methoxy and ethoxy, acyloxy groups such as acetoxy, organoamino groups such as N-butylamino, organoacylamide groups such as methylacetamide, N,N-diorganohydroxyamino groups such as N,N-diethylhydroxyamino, and alkenyloxy groups such as propenoxy. The subscript f is an integer from 0 to 2 and preferably has a value of 1. Component (B) can be exemplified by methyltrimethoxysilane, dimethyldimethoxysilane, phenyltrimethoxysilane, methylphenyldimethoxysilane, methyltri(methyl ethyl ketoxime)silane, and methyltriacetoxysilane. Component (B) can be a single organosilane or partial hydrolysis condensate thereof or can be a mixture of two or more organosilanes or partial hydrolysis condensates thereof. Component (B) should be added at from 1 to 90 weight parts and is preferably added at from 1 to 60 weight parts, in each case per 100 weight parts component (A).

The cure-promoting catalyst (C) is used to accelerate the cure of the inventive composition. This catalyst is preferably an amine or a titanium, tin, zinc, cobalt, iron, or aluminum compound, and may be a combination of the preceding. This catalyst can be selected from those condensation reaction-accelerating catalysts typically used for the dehydration condensation of the silanol group. Component (C) can be specifically exemplified by the tin salts of carboxylic acids, e.g., dibutyltin diacetate, dibutyltin dilaurate, dibutyltin dioctoate, stannous octanoate, stannous naphthenate, stannous oleate, stannous isobutyrate, stannous linolate, stannous stearate, stannous naphthoate, stannous laurate, stannous crotonate, stannous p-bromobenzoate, stannous cinnamate, and the stannous salt of phenylacetic acid; by the iron, manganese, and cobalt salts of the preceding carboxylic acids; and by tetraalkyl titanates, the complex salts of dialkyl titanates, and organosiloxytitanates. Component (C) can also be exemplified by the naphthenic acid salts and octylic acid salts of zinc, cobalt, and iron. Component (C) should be added in sufficient quantity to induce the cure of the inventive composition, and as a general rule will be added at from 0.0001 to 10 weight parts per 100 weight parts (A).

The inventive composition preferably also contains a volatile organic solvent or a volatile silicone oil as component (D). Usable volatile organic solvents can be exemplified by aromatic solvents such as benzene, toluene, and xylene; aliphatic solvents such as cyclohexane, methylcyclohexane, and dimethylcyclohexane; chlorinated solvents such as trichloroethylene, 1,1,1-trichloroethane, carbon tetrachloride, and chloroform; aliphatically saturated hydrocarbon solvents such as hexane and technical gasoline; ethers such as diethyl ether and tetrahydrofuran; ketones such as methyl isobutyl ketone; and fluorinated solvents such as α,α,α-trifluorotoluene and hexafluoroxylene. The volatile silicone oils can be exemplified by hexamethyldisiloxane, hexamethylcyclotrisiloxane, octamethylcyclotetrasiloxane, and decamethylcyclopentasiloxane. Component (D), if used, should be added at from 1 to 100,000 weight parts per 100 weight parts (A), and is preferably added at from 10 to 10,000 weight parts per 100 weight parts (A) and more preferably is added in a quantity that gives a component (A) concentration of 5 to 90 weight%. In the case of an inventive composition that has been diluted with a volatile organic solvent or volatile silicone oil (D), the formation of a cured film can be effected, for example, by coating the diluted composition on any of various substrates and heating or holding in the atmosphere to evaporate off the organic solvent or silicone oil.

The inventive composition comprises the components (A) to (C) or (A) to (D) as described above, but this composition may also contain functional silane coupling agent, such as those given below, in order to improve the adherence to various substrates.

NH₂CH₂CH₂Si(OC₂H₅)₃

NH₂CH₂CH₂NH(CH₂)₃Si(OCH₃)₃

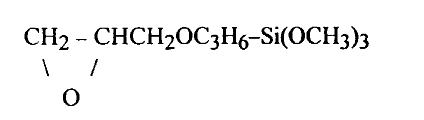

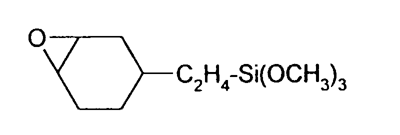

HS(CH₂)₃Si(OCH₃)₃ .

CH₂=C(CH₃)COOC₃H₆-Si(OCH₃)₃

A single silane coupling agent can be used, or combinations of 2 or more silane coupling agents can be employed. The silane coupling agent is preferably used in the range from 0.01 to 10 weight% referred to the composition of this invention.

The inventive composition can be produced by mixing components (A) to (C) or (A) to (D) to homogeneity in the absence of moisture. While the mixing sequence is not critical, when the silicon-containing aromatic polymer (A) is a solid it will be preferable to first prepare a solution by dissolving (A) in the volatile organic solvent or volatile silicone oil (D) and to then mix this solution with the other components.

The inventive composition can be stored for long periods of time in the absence of moisture. It cures at room temperature in the presence of moisture to form a high-hardness film that exhibits an excellent water repellency, solvent resistance, antistatic performance, UV absorption, and charge-transport capacity. In addition, its cure can be accelerated by the application of heat. As a consequence, the inventive composition is very well suited for use in the various applications where the aforementioned properties are critical. For example, it is useful in antistatic applications, as a photosensitive sensor, and as a coating for electrophotographic carriers.

### EXAMPLES

The invention is explained in greater detail hereinbelow through working examples. The water repellency of the cured films was evaluated through the contact angle for water. The contact angle was measured at 22°C by dropping water from a microsyringe at 10 locations on the surface of the cured film and determining the corresponding contact angles using a contact angle meter from Kyowa Kaimen Kagaku Kabushiki Kaisha. The average of the 10 measurements is reported as the contact angle of water on the cured film.

### Reference Example 1

1.7 g (8.7 mmol) 1,4-bis(dimethylsilyl)phenylene with the following structure (here and below, Me = CH₃) 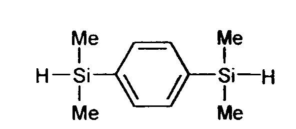 and 3 g toluene were introduced into a flask fitted with a stirrer, thermometer, and reflux condenser, into which sufficient platinum/divinyltetramethyldisiloxane complex solution was then added, while stirring the contents of the flask at 50°C, to provide 30 ppm platinum metal in the system. A mixed solution of 10 g toluene and 4.27 g (7.9 mmol) of the compound with the structure 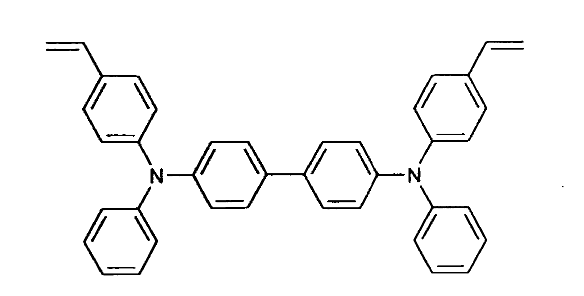 was then added dropwise and heating was carried out for 2 hours. This was followed by the introduction of 0.43 g (2.9 mmol) vinyltrimethoxysilane and heating for another 1 hour. The volatile fraction was subsequently removed under reduced pressure to give 6 g of a reaction product that was solid at room temperature. This reaction product, which was obtained in a yield of 94%, was submitted to analysis by gel permeation chromatography (solvent = toluene), Fourier-transform infrared spectroscopic analysis, ¹³C-nuclear magnetic resonance spectral analysis, and ²⁹Si-nuclear magnetic resonance spectral analysis, the results of which confirmed it to be silicon-containing aromatic polymer with the following chemical structure.

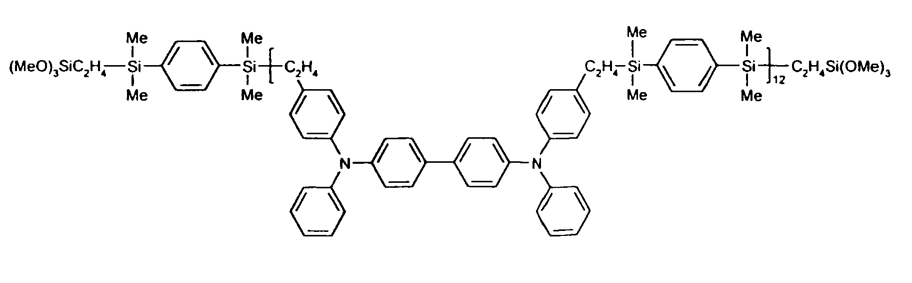

### Example 1

A curable silicon-containing aromatic polymer composition was prepared by mixing the following to homogeneity into 100 g of a toluene solution afforded by the dissolution of 20 g of the silicon-containing aromatic polymer synthesized in Reference Example 1 (20 weight% solids): 1 g dibutyltin dilaurate, 5 g methyltrimethoxysilane, and 0.5 g γ-glycidoxypropyltrimethoxysilane. The resulting composition was spin-coated on the surface of a flat, smooth glass plate, at which point evaporation of the solvent immediately produced a tackfree condition. A cured film with a pencil hardness of 3H was formed by standing for 1 week at room temperature. Measurement of the contact angle of this cured film gave a contact angle for water of 100°. A drop of toluene was also dripped onto the surface of the cured film, allowed to stand for 1 minute, and then wiped off with paper. Ensuing examination of the appearance of the film confirmed that absolutely no change in appearance had occurred. A transmittance of 0% was found when the cured film-coated glass plate was submitted to measurement of its UV transmittance at 400 nm using a transmittance instrument (UV-Visible Recording Spectrophotometer UV-265FW from Shimadzu). This stood in contrast to the 100% UV transmittance determined for the untreated glass plate. These results confirmed that the cured film produced by the inventive composition had an excellent water repellency, solvent resistance, and UV absorption.

### Example 2

A curable silicon-containing aromatic polymer composition was prepared by mixing 1 g tetrabutyl titanate and 5 g methyltri(methyl ethyl ketoxime)silane to homogeneity into 100 g of a toluene solution afforded by the dissolution of 20 g of the silicon-containing aromatic polymer synthesized in Reference Example 1 (20 weight% solids). The resulting composition was spin-coated on the surface of a flat, smooth glass plate, at which point evaporation of the solvent immediately produced a tackfree condition. A cured film with a pencil hardness of 4H was formed by heating for 30 minutes at 80°C. Measurement of the contact angle of this cured film gave a contact angle for water of 101°.

### Example 3

A curable silicon-containing aromatic polymer composition was prepared by mixing 1 g dibutyltin dilaurate to homogeneity into 100 g of a toluene solution afforded by the dissolution of 20 g of the silicon-containing aromatic polymer synthesized in Reference Example 1 (20 weight% solids). The resulting composition was spin-coated on the surface of a flat, smooth glass plate, at which point evaporation of the solvent immediately produced a tackfree condition. A cured film with a pencil hardness of 3H was formed by heating for 15 minutes at 110°C. Measurement of the contact angle of this cured film gave a contact angle for water of 100°.

The curable silicon-containing aromatic polymer composition of this invention, because it comprises the hereinabove-described components (A) to (C) or (A) to (D), and in particular because it employs as its component (A) the silicon-containing aromatic polymer whose main chain incorporates a charge-transporting group, is characterized by the ability to cure into a high-hardness film or coating that exhibits an excellent water repellency, excellent solvent resistance, and excellent UV absorption.

## Claims

1. A curable silicon-containing aromatic polymer composition comprising
(A) 100 weight parts silicon-containing aromatic polymer having a silicon-bonded hydrolyzable group at both molecular chain terminals and a main chain as defined by units of the general formula 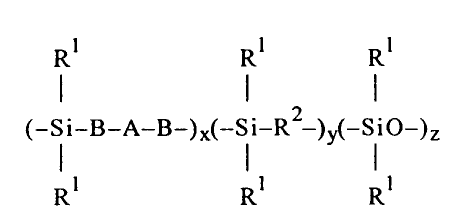 wherein A denotes a divalent organic group that contains at least 1 nitrogen atom and at least 3 six-membered aromatic rings, B denotes a C₂ to C₆ alkylene group, R¹ denotes unsubstituted or halogen-substituted C₁ to C₁₀ monovalent hydrocarbon groups that lack aliphatic unsaturation, R² is an alkyleneoxyalkylene group or an unsubstituted or alkoxy-substituted C₂ to C₁₀ divalent hydrocarbon group, the subscript **x** is an integer with a value of at least 1, the subscripts **y** and **z** are each integers with a value of at least 0, and (**y** + **z**) is at least 2,
(B) 1 to 90 weight parts of an organosilane having the general formula R_{f}SiX_{4-f}, or the partial hydrolysis condensates thereof, where R denotes unsubstituted or halogen-substituted monovalent hydrocarbon groups, X denotes hydrolyzable groups, **f** is an integer from 0 to 2, and
(C) a cure-promoting catalyst in sufficient quantity to induce the cure of the silicon-containing aromatic polymer composition.

2. The curable silicon-containing aromatic polymer composition of Claim 1, in which the divalent organic group A in component (A) is a charge-transporting group selected from the following structures 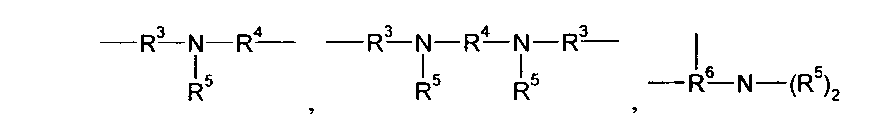 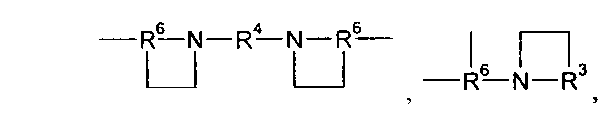 and 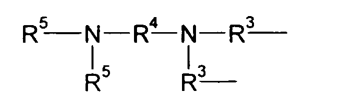 in which R³ and R⁴ denote divalent hydrocarbon groups, R⁵ denotes monovalent hydrocarbon groups, and R⁶ denotes trivalent hydrocarbon groups, wherein at least 1 of the preceding is an aromatic hydrocarbon ring-containing group and A contains a total of at least 3 six-membered aromatic rings.

3. The curable silicon-containing aromatic polymer composition of Claims 1 or 2 in which the silcon-bonded hydrolyzable group at both molecular chain terminals of component (A) are alkoxy.

4. A curable silicon-containing aromatic polymer composition according to Claim 1 further comprising 1 to 100,000 weight parts volatile organic solvent or volatile silicone oil.

5. The curable silicon-containing aromatic polymer composition of claims 1 or 4 further comprising a functional silane coupling agent.

6. A method of making a curable silicon-containing aromatic polymer composition comprising mixing
(A) 100 weight parts silicon-containing aromatic polymer having a silicon-bonded hydrolyzable group at both molecular chain terminals and a main chain as defined by units of the general formula 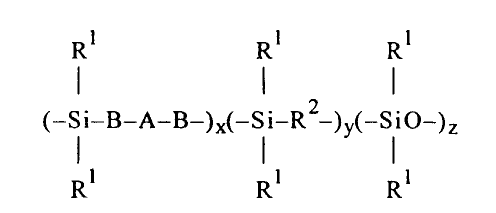 wherein A, B, R¹ and R² and subscripts x, y and z are as defined in Claim 1,
(B) 1 to 90 weight parts of an organosilane having the general formula R_{f}SiX_{4-f}, or the partial hydrolysis condensates thereof, wherein R, X and subscript f are as defined in Claim 1, and
(C) a cure-promoting catalyst in sufficient quantity to induce the cure of the silicon-containing aromatic polymer composition,
in the absence of moisture.

7. A method of making a curable silicon-containing aromatic polymer composition comprising, dissolving
(A) 100 weight parts silicon-containing aromatic polymer having a silicon-bonded hydrolyzable group at both molecular chain terminals and a main chain as defined by units of the general formula 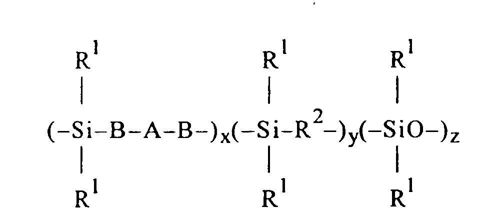 wherein A, B, R¹ and R² and subscripts x, y and z are as defined in Claim 1, in a volatile organic solvent or a volatile silicone oil, mixing the solution with
(B) 1 to 90 weight parts of an organosilane having the general formula R_{f}SiX_{4-f}, or the partial hydrolysis condensates thereof, wherein R and X and subscript f are as defined in Claim 1, and
(C) a cure-promoting catalyst in sufficient quantity to induce the cure of the silicon-containing aromatic polymer composition,
and optionally with a functional silane coupling agent, in the absence of moisture.

8. A cured film composition comprising the reaction product of the curable composition of Claim 1.

9. A coated substrate comprising a substrate having a surface whereon at least part of said surface is coated with the cured film composition of Claim 8.
